# EUROPEAN PATENT APPLICATION

(11) **EP 2 187 632 A1**
(43) Date of publication of application: **19.05.2010**
(21) Application number: 09006709.1
(22) Date of filing: 19.05.2009
(51) Int. Cl.: H04N 5/76, H04N 5/782

(54) **Recorder and control method thereof**

(30) Priority: 12.11.2008 JP 2008290318
(71) Applicant: Kabushiki Kaisha Toshiba, Minato-ku, Tokyo 105-8001 (JP)
(72) Inventor: Koike, Masakazu, Tokyo 105-8001 (JP)
(74) Representative: HOFFMANN EITLE

(57) **Abstract**

According to one embodiment, a recorder configured to record television broadcasting includes a scheduled recording module (302),an automatic recording module (301), and a recording controller (250). The scheduled recording module (302) performs the scheduled recording of a specific program. The automatic recording module (301) performs the automatic recording of programs from multiple channels. The recording controller (250) stores data of programs recorded by the scheduled recording module (302) and the automatic recording module (301) in a storage module. Upon receipt of an instruction to schedule recording of more programs than can be recorded by the scheduled recording module (302) through scheduled recording, the recording controller (250) stores data of at least part of the programs specified by the instruction automatically recorded by the automatic recording module (301) as data recorded by the scheduled recording module (302).

## Description

### BACKGROUND

### 1. Field

One embodiment of the invention relates to a recorder and, more specifically, to a recorder configured to receive television broadcasting and record a specific channel or automatically record multiple or all channels, and a control method thereof.

### 2. Description of the Related Art

For example, Japanese Patent Application Publication (KOKAI) No. 2006-332873 discloses a recorder capable of recording multiple channels. Further, there have been proposed higher performance recorders with two systems of recording functions, i.e., personal video recorder (PVR) recording function and full recording function. The PVR recording function refers to the function of recording a program that a user has scheduled to record, while the full recording function refers to the function of automatically recording multiple or all channels without requiring a user to specify or program the recording. In the PVR recording of such a recorder, there is a limit on the number of channels to be recorded. On the other hand, in the full recording, since the recorder has limited recording capacity, recorded contents are automatically deleted from the least recent recorded one.

In the higher performance recorders with two systems of recording functions as described above, the two systems of recording functions operate independently. Therefore, even if the recorders are capable of recording more channels than can be recorded by the PVR recording function, the PVR recording function limits the number of channels that can be scheduled to be recorded during the same time period. Besides, after a lapse of certain time, automatically recorded programs are deleted automatically from the least recent recorded one. Consequently, a user can view a desired program before it is deleted. However, the user cannot view a program that has already been deleted or that has not been scheduled to be recorded due to the limit on the number of channels for scheduled or timer recording.

It is therefore an object of the invention to provide a recorder with two systems of recording functions for recording a specific channel and automatically recording multiple or all channels, and a method thereof capable of increasing the number of channels that can be scheduled to be recorded during the same time period through the cooperation of the recording functions.

### SUMMARY OF THE INVENTION

To achieve the object mentioned above, according to an aspect of the invention, a recorder comprises a scheduled recording module, an automatic recording module, and a recording controller. The scheduled recording module is configured to perform scheduled recording of a specific program. The automatic recording module is configured to perform automatic recording of programs from multiple channels. The recording controller is configured to store data of programs recorded by the scheduled recording module and the automatic recording module in a storage module. Upon receipt of an instruction to schedule recording of more programs than can be recorded by the scheduled recording module through scheduled recording, the recording controller stores data of at least part of the programs specified by the instruction automatically recorded by the automatic recording module as data recorded by the scheduled recording module.

According to another aspect of the invention, there is provided a method of controlling a recorder configured to record television broadcasting and comprising a scheduled recording module configured to perform scheduled recording of a specific program and an automatic recording module configured to perform automatic recording of programs from multiple channels. The method comprises storing, upon receipt of an instruction to schedule recording of more programs than can be recorded by the scheduled recording module through scheduled recording, data of the programs specified by the instruction automatically recorded by the automatic recording module in a storage module as data recorded by the scheduled recording module.

As described above, according to an aspect of the invention, in a recorder capable of recording a specific channel as well as automatically recording multiple or all channels, it is possible to increase the number of channels that can be scheduled to be recorded during the same time period.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic diagram of a use environment of a digital television (TV) broadcast recorder according to an embodiment of the invention;
FIG. 2 an exemplary block diagram of a signal processing system of the digital TV broadcast recorder in the embodiment;
FIG. 3 is an exemplary functional block diagram of the digital TV broadcast recorder in the embodiment;
FIG. 4 is an exemplary schematic diagram of a timer recording screen using a program list such as EPG in the embodiment; and
FIG. 5 is an exemplary sequence diagram of a control process performed with a program recording control function in the embodiment.

### DETAILED DESCRIPTION

Various embodiments according to the invention will be described hereinafter with reference to the accompanying drawings.

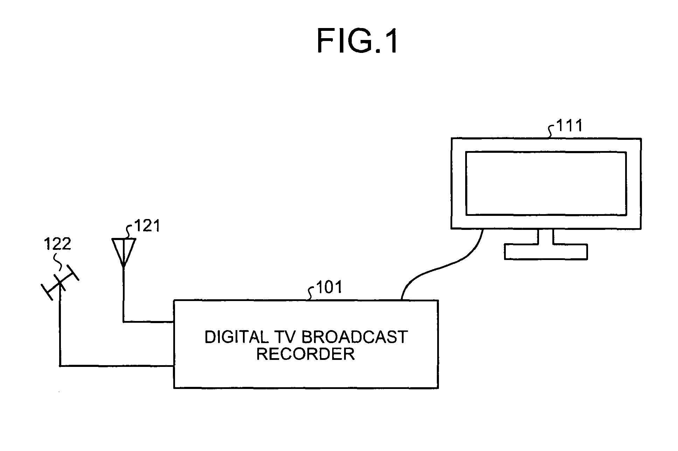

FIG. 1 is a schematic diagram of the use environment of a digital television (TV) broadcast recorder 101 as an recorder according to an embodiment of the invention. While the recorder of the embodiment will be described by way of example as a digital TV broadcast recorder, it may be an analog TV broadcast recorder. Incidentally, digital TV broadcasting is standardized, and the details defined by the standard will not be described herein.

As illustrated in FIG. 1, an antenna 121 for receiving BS/CS digital broadcasting and an antenna 122 for receiving digital terrestrial broadcasting are connected to the input side of the digital TV broadcast recorder 101. Meanwhile, a digital TV broadcast receiver 111 is connected to the output side of the digital TV broadcast recorder 101. Upon receipt of a digital TV broadcast signal, the digital TV broadcast recorder 101 decodes it, thereby recording a program. The digital TV broadcast recorder 101 sends video and audio signals of a program currently being broadcast or a recorded program to the digital TV broadcast receiver 111. With this, the program can be viewed on the digital TV broadcast receiver 111.

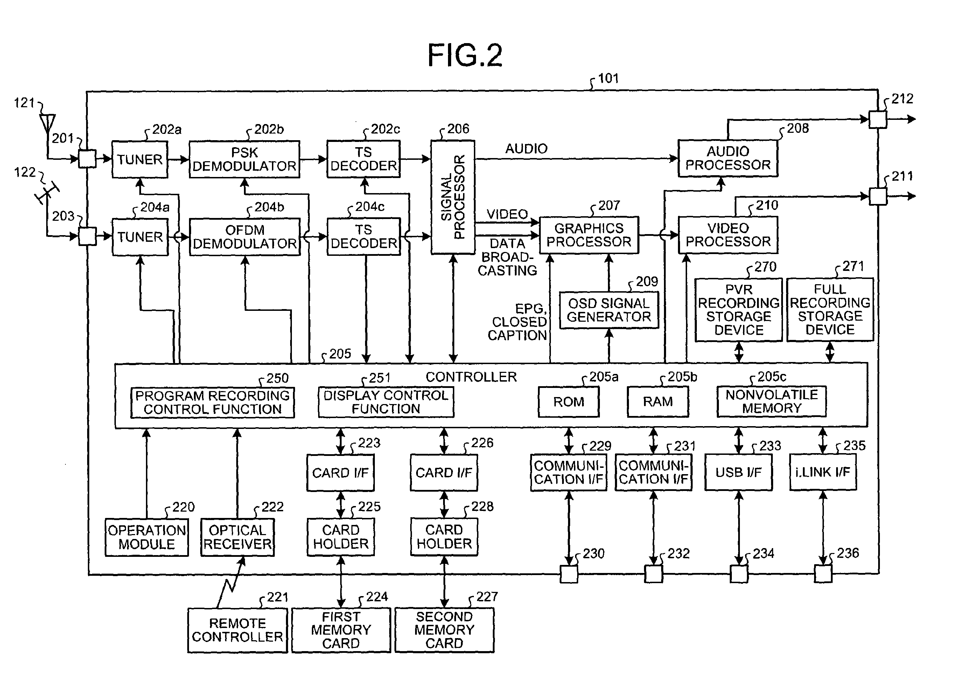

While the digital TV broadcast recorder 101 is illustrated in FIG. 1 (and FIG. 2) as having only two systems, one for receiving BS/CS digital broadcasting and the other for receiving digital terrestrial broadcasting, this is for simplicity only. The digital TV broadcast recorder 101 of the embodiment is capable of recording programs from multiple channels by both PVR recording and full recording. Accordingly, the digital TV broadcast recorder 101 is provided with a plurality of receiving circuits such as tuners for receiving BS/CS digital broadcasting and also those for receiving digital terrestrial broadcasting.

A description will be given of the hardware configuration of the digital TV broadcast recorder 101. FIG. 2 is a block diagram of a signal processing system of the digital TV broadcast recorder 101.

When the antenna 121 for receiving BS/CS digital broadcasting receives a satellite digital TV broadcast signal, the broadcast signal is sent to a tuner 202a for satellite digital broadcast via an input terminal 201. According to a control signal from a controller 205, the tuner 202a selects a broadcast signal from a desired channel, and outputs the broadcast signal to a phase shift keying (PSK) demodulator 202b.

The PSK demodulator 202b demodulates the broadcast signal received from the tuner 202a according to a control signal from the controller 205. Thus, the PSK demodulator 202b acquires a transport stream (TS) containing a desired program, and outputs it to a TS decoder 202c.

The TS decoder 202c performs TS decoding on a multiplexed TS signal according to a control signal from the controller 205. The TS decoder 202c also depacketizes digital video and audio signals of the desired program to obtain a packetized elementary stream (PES). The TS decoder 202c then outputs the PES to an STD buffer (not illustrated) in a signal processor 206. In addition, the TS decoder 202c sends section information transmitted via digital broadcasting to a section processor (not illustrated) in the signal processor 206.

When the antenna 122 for receiving digital terrestrial broadcasting receives a digital terrestrial TV broadcast signal, the broadcast signal is sent to a tuner 204a for digital terrestrial broadcast via an input terminal 203.
According to a control signal from the controller 205, the tuner 204a selects a broadcast signal from a desired channel, and outputs the broadcast signal to an orthogonal frequency division multiplexing (OFDM) demodulator 204b.

The OFDM demodulator 204b demodulates the broadcast signal received from the tuner 204a according to a control signal from the controller 205. Thus, the OFDM demodulator 204b acquires a transport stream containing a desired program, and outputs it to a TS decoder 204c.

The TS decoder 204c performs TS decoding on a multiplexed TS signal according to a control signal from the controller 205. The TS decoder 204c also depacketizes digital video and audio signals of the desired program to obtain a PES. The TS decoder 204c then outputs the PES to the STD buffer in the signal processor 206. In addition, the TS decoder 204c sends section information transmitted via digital broadcasting to the section processor in the signal processor 206.

While a user is viewing a TV program, the signal processor 206 selectively performs predetermined digital signal processing on the digital video and audio signals received from the TS decoder 202c and those received from the TS decoder 204c. Then, the signal processor 206 outputs the video signal to a graphics processor 207 and the audio signal to an audio processor 208. While a program is being recorded, the signal processor 206 selectively performs predetermined digital signal processing on the digital video and audio signals received from the TS decoder 202c and those received from the TS decoder 204c. Then, the signal processor 206 stores the signals in a PVR recording storage device (for example, HDD) 270 or a full recording storage device (for example, HDD) 271 through the controller 205. While a recorded program is being reproduced, the signal processor 206 performs predetermined digital signal processing on data of the recorded program read from the PVR recording storage device or the full recording storage device 271 through the controller 205. Then, the signal processor 206 outputs the data to the graphics processor 207 and the audio processor 208.

Although not illustrated in FIG. 2, the digital TV broadcast recorder 101 is provided with systems of the tuner 202a, the PSK demodulator 202b, the TS decoder 202c, the tuner 204a, the OFDM demodulator 204b, and the TS decoder 204c necessary or more than necessary for the full recording function. For example, if capable of recording programs from all terrestrial TV stations in Tokyo, the digital TV broadcast recorder 101 is provided with seven or more than seven systems of the tuner 204a, the OFDM demodulator 204b, and the TS decoder 204c.

The controller 205 receives various types of data for obtaining a program such as key information for BS conditional access system (B-CAS) descrambling, electronic program guide (EPG) information, program attribute information such as program category, closed caption information such as program specific information (PSI) and service information (SI), and the like. From the received information, the controller 205 generates image data to display an EPG or closed captions, and outputs the image data to the graphics processor 207.

Besides, the controller 205 has the function of controlling the recording and scheduled or timer recording of a program (program recording control function 250). When a user programs the recording of a program, the controller 205 displays EPG information on an external display device such as the digital TV broadcast recorder 101. Having received input from the user through an operation module 220 or a remote controller 221, the controller 205 stores information specified by the user in a predetermined storage module. Thus, the controller 205 controls the tuners 202a and 204a, the PSK demodulator 202b, the OFDM demodulator 204b, the TS decoders 202c and 204c, and the signal processor 206 so that a specified program is to be recorded during a preset time period. Further, with the full recording function, when automatically recording programs of all available channels, the controller 205 controls the respective modules during the time period other than the preset time period.

From the section information received from the TS decoder 202c (204c), the section processor outputs to the controller 205 various types of data for obtaining a program, EPG information, program attribute information such as program category, closed caption information such as PSI and SI, and the like.

The graphics processor 207 synthesizes the following signals: (1) a digital video signal fed from an AV decoder (not illustrated) in the signal processor 206, (2) an on screen display (OSD) signal generated by an OSD signal generator 209, (3) image data of data broadcasting, and (4) an EPG/closed caption signal generated by the controller 205. The graphics processor 207 outputs the synthesized signals to a video processor 210. In addition, to display a closed-captioned broadcast video or program with closed captions, based on closed caption data under the control of the controller 205, the graphics processor 207 superimposes the closed caption data on the video signal.

The digital video signal output from the graphics processor 207 is input to the video processor 210. The video processor 210 converts the input digital video signal to an analog video signal in a format displayable on the digital TV broadcast receiver 111. The video processor 210 then outputs the analog video signal to the digital TV broadcast receiver 111 via an output terminal 211 to display the video thereon.

The audio processor 208 converts the input digital audio signal to an analog audio signal in a format reproducible by the digital TV broadcast receiver 111. The audio processor 208 then outputs the analog audio signal to the digital TV broadcast receiver 111 via an output terminal 212 to reproduce the audio thereon.

The controller 205 controls the overall operation of the digital TV broadcast recorder 101 including the operation of receiving various types of signals as described above. The controller 205 comprises a built-in central processing unit (CPU). Upon receipt of operation information sent from the operation module 220 or operation information sent from the remote controller 221 via an optical receiver 222, the controller 205 controls the respective modules according to the operation information.

The controller 205 performs this control using mainly a read only memory (ROM) 205a, a random access memory (RAM) 205b, and a nonvolatile memory 205c. The ROM 205a stores a control program executed by the CPU. The RAM 205b provides a work area to the CPU. The nonvolatile memory 205c stores various types of setting information, control information, and the like.

The controller 205 is connected via a card interface (I/F) 223 to a card holder 225 into which a first memory card 224 can be inserted. With this, the controller 205 can communicate data with the first memory card 224 in the card holder 225 through the card I/F 223.

Similarly, the controller 205 is connected via a card I/F 226 to a card holder 228 into which a second memory card 227 can be inserted. With this, the controller 205 can communicate data with the second memory card 227 in the card holder 228 through the card I/F 226.

Further, the controller 205 is connected via a communication I/F 229 to a first LAN terminal 230. With this, the controller 205 can communicate data with a LAN-compatible device (for example, an external HDD) connected to the first LAN terminal 230 through the communication I/F 229. The controller 205 has a dynamic host configuration protocol (DHCP) server function, and, in this case, the controller 205 assigns an internet protocol (IP) address to the LAN-compatible device connected to the first LAN terminal 230 to control it.

Similarly, the controller 205 is connected via a communication I/F 231 to a second LAN terminal 232. With this, the controller 205 can communicate data with various types of LAN-compatible devices connected to the second LAN terminal 232 through the communication I/F 231.

Still further, the controller 205 is connected via a USB I/F 233 to a USB terminal 234. With this, the controller 205 can communicate data with various types of devices connected to the USB terminal 234 through the USB I/F 233.

Still further, the controller 205 is connected via an i.LINK I/F 235 to an i.LINK terminal 236. With this, the controller 205 can communicate data with various types of devices connected to the i.LINK terminal 236 through the i.LINK I/F 235.

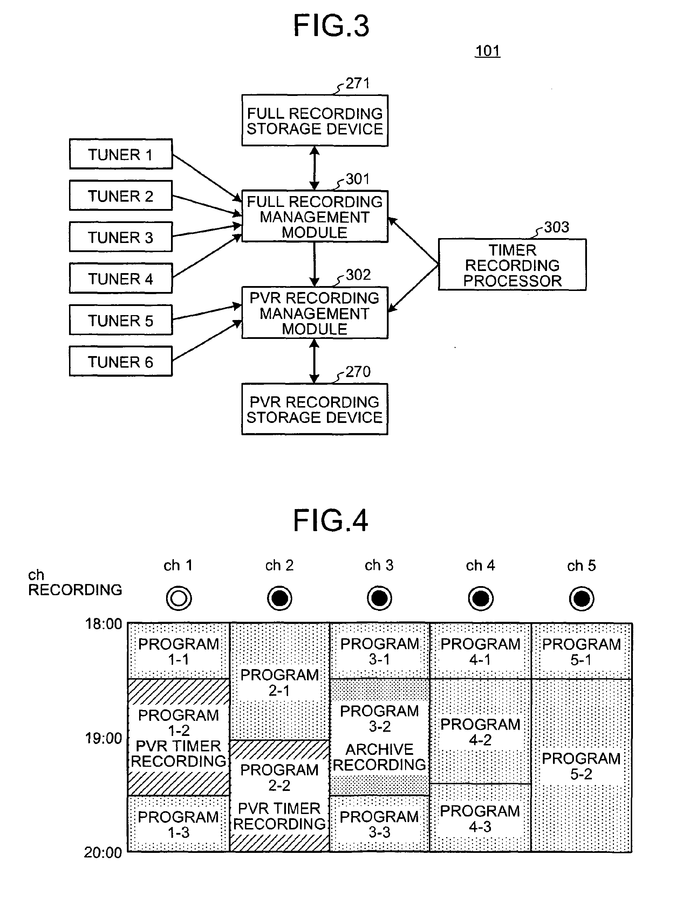

For facilitating understanding, a description will be given of the digital TV broadcast recorder 101 having the hardware configuration as described above with reference to FIG. 3. FIG. 3 is a conceptual functional block diagram of the digital TV broadcast recorder 101. In FIG. 3, constituent elements corresponding to those of FIG. 2 are designated by like reference numerals.

As illustrated in FIG. 3, the program recording control function 250 comprises a full recording management module 301, a PVR recording management module 302, and a timer recording processor 303. The full recording management module 301 manages full recording, while the PVR recording management module 302 manages PVR recording. A program from each channel obtained through each of tuners 1 to n (tuners 1 to 4 in FIG. 3) is recorded on the full recording storage device 271 by the full recording management module 301. On the other hand, a program from each channel obtained through each of tuners n + 1 and n + 2 (tuners 5 and 6 in FIG. 3) is recorded on the PVR recording storage device 270 by the PVR recording management module 302.

With conventional technologies, the full recording management module 301 and the PVR recording management module 302 perform recording control or management independently of each other, and the timer recording processor 303 performs processing to program the recording of a program for the PVR recording management module 302. On the other hand, according to the embodiment, as will be described in detail later, the timer recording processor 303 performs control processing for both the full recording management module 301 and the PVR recording management module 302.

According to the embodiment, the digital TV broadcast recorder 101 has salient features for scheduled or timer recording as follows:
(1) If a program can be recorded by the PVR recording function, the digital TV broadcast recorder 101 performs the PVR recording of the program. If not, the digital TV broadcast recorder 101 performs the archive recording of the program, i.e., records the program in an archive, using the full recording function.
(2) When the program has been recorded in the archive, the program is automatically copied into the PVR recording storage device 270. In this manner, in the archive recording, the full recording management module 301 records a program to be recorded in the archive with the full recording function. After the program is recorded, data of the recorded program is copied into the PVR recording storage device 270. Thus, the archive recording implements the scheduled or timer recording of the program.
(3) In general, the digital TV broadcast recorder 101 displays a mark or a symbol indicating whether each program is to be recorded by PVR timer (scheduled) recording or archive recording on a timer recording screen or an EPG screen so that the user can identify whether each program is to be recorded by PVR timer recording or archive recording. Incidentally, the mark is displayed by a display control function 251 of the controller 205 that controls the graphics processor 207 to generates a predetermined mark.

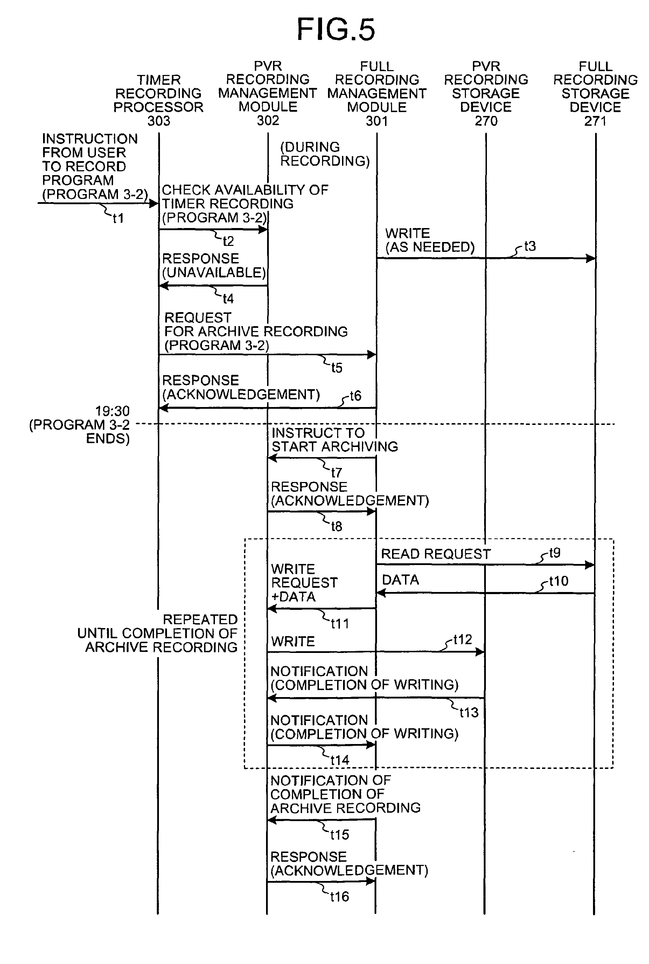

With reference to FIGS. 4 and 5, a description will now be given of the operation of the controller 205 to control the timer recording of a program by using the program recording control function 250. FIG. 4 illustrates an example of a timer recording screen using a program list such as EPG. FIG. 5 is a sequence diagram of a control process performed by the program recording control function 250.

FIG. 4 illustrates, by way of example, a list of programs broadcasted from 18:00 to 20:00 for five channels from ch1 to ch5. In the example, programs 1-2 and 2-2 are scheduled to be recorded by PVR timer recording, while a program 3-2 is scheduled to be recorded by archive recording.

As illustrated in FIG. 3, it is assumed in the embodiment that the PVR recording is available for two channels. In the example of FIG. 4, the user has scheduled to record three channels. However, since the PVR recording is available for only two channels, the timer recording processor 303 automatically sets a program from remaining one channel, i.e. , the program 3-2, to be recorded by archive recording. This control sequence will be described with reference to FIG. 5.

FIG. 5 illustrates an example of the control sequence in the case where the recording of programs is scheduled as illustrated in FIG. 4. In the following, it is assumed that the user specifies a program to schedule to record it when the programs 1-2 and 2-2 have already been scheduled to be recorded by PVR timer recording.

First, having received an instruction from the user to schedule the recording of the program 3-2 (t1), the timer recording processor 303 inquires of the PVR recording management module 302 whether the program 3-2 can be scheduled to be recorded (t2). During this period, the full recording storage device 271 is written (recorded) on an as-needed basis under the control of the full recording management module 301 (t3).

If the program 3-2 can be scheduled to be recorded by PVR timer recording, the PVR recording management module 302 schedules the recording of the program 3-2 by PVR timer recording. In this example, the programs 1-2 and 2-2 from two channels have already been scheduled to be recorded by PVR timer recording, and therefore, the PVR recording management module 302 notifies the timer recording processor 303 in response to the inquiry that the PVR timer recording is not available (t4).

Having notified of unavailability of the PVR timer recording, the timer recording processor 303 request the full recording management module 301 to schedule the recording of the program 3-2 by archive recording (t5) . Upon receipt of the request to schedule the archive recording, the full recording management module 301 returns an acknowledgement indicating that it accepts the request for the archive recording to the timer recording processor 303 (t6).

As illustrated in FIG. 4, the program 3-2 ends at 19:00. Accordingly, at this time, the full recording management module 301 instructs the PVR recording management module 302 to start copying (referred to herein as "archiving") the program 3-2 from the full recording storage device 271 into the PVR recording storage device 270 (t7) . Having received the instruction to start archiving the program 3-2, the PVR recording management module 302 returns an acknowledgement of the instruction to the full recording management module 301 (t8).

Thereafter, the full recording management module 301 send a read request to the full recording storage device 271 (t9), and receives data of the recorded program in predetermined units in response to the read request (t10).

Upon receipt of the data from the full recording storage device 271, the full recording management module 301 sends the data to the PVR recording management module 302 with a write request (t11). Having received the write request, the PVR recording management module 302 writes the data received from the full recording management module 301 to the PVR recording storage device 270 (t12).

When the data has been written to the PVR recording storage device 270, the PVR recording storage device 270 notifies the PVR recording management module 302 of completion of writing (t13). Having notified by the PVR recording storage device 270 of completion of writing, the PVR recording management module 302 notifies the full recording management module 301 that the data has been written to the PVR recording storage device 270 (t14).

The sequence of processes from t9 to t14 is repeated until all the data of the program 3-2 has been copied (archived) from the full recording storage device 271 to the PVR recording storage device 270.

On completion of archiving of all the data of the program 3-2 from the full recording storage device 271 to the PVR recording storage device 270, the full recording management module 301 notifies the PVR recording management module 302 that the archive recording is completed (t15). Accordingly, the PVR recording management module 302 returns an acknowledgement of the notification (t16).

In this manner, the controller 205 performs the archive recording, for example, in response to an instruction for the timer recording of a program from the user using the program recording control function 250. In the above example, while the archive recording is performed for the program 3-2 from one channel, it can be performed for programs from channels that can be recorded by the full recording function.

As described above, according to the embodiment, the digital TV broadcast recorder 101 is capable of timer recording of programs from more channels than can be recorded by conventional PVR timer recording using the archive recording.

The embodiment may be susceptible to various modifications and alternative forms. Some modifications will be described by way of example.

If the full recording function does not support all broadcast channels, the PVR timer recording of a program for which full recording is available is changed to the archive recording, while a program for which full recording is not available is scheduled to be recorded by the PVR recording function. This, in a practical sense, increases the number of channels that can be recorded by the full recording function. When the number of programs scheduled to be recorded exceeds the number of programs recordable by the PVR timer recording, the PVR timer recording may be changed to the archive recording with respect to the PVR timer recording of a program from a channel for which both the full recording and PVR recording are available.

When the data of a recorded program that can only be moved is moved from the full recording storage device 271 to the PVR recording storage device 270, the data is deleted from the full recording storage device 271. Consequently, the program cannot be viewed from the full recording storage device 271. To cope with this, the following control processes may be employed:
(1) Even if a program is recorded by archive recording, the data of the program recorded by archive recording is not moved for a predetermined period of time. Then, before the data is automatically deleted, and at the time the data can be sufficiently moved from the full recording storage device 271 to the PVR recording storage device 270, the data is automatically moved to the PVR recording storage device 270.
(2) After a program is recorded by archive recording, the digital TV broadcast recorder 101 lets the user select whether to move the data of the recorded program by, for example, displaying a message or the like. Upon receipt of user operation, the digital TV broadcast recorder 101 moves the data to the PVR recording storage device 270 or leaves the data in the full recording storage device 271 so that it is automatically deleted.

When the full recording is set to be performed during a specific period of time, and a program to be recorded by archive recording is not broadcast during the specific period, the scheduled broadcast time of the program to be recorded by archive recording is set to be a period of time for which the full recording is performed.

Although an embodiment of the invention is described above as being applied to a digital TV broadcast recorder, this is by way of example only. For example, the embodiment may be applied to digital TV broadcast receivers. In addition, the embodiment may be applied to analog TV broadcast recorders and receivers as well as digital/analog TV broadcast recorders and receivers.

The various modules of the systems described herein can be implemented as software applications, hardware and/or software modules, or components on one or more computers, such as servers. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A recorder configured to record television broadcasting, the recorder comprising:
a scheduled recording module (302) configured to perform scheduled recording of a specific program;
an automatic recording module (301) configured to perform automatic recording of programs from multiple channels; and
a recording controller (250) configured to store data of programs recorded by the scheduled recording module (302) and the automatic recording module (301) in a storage module, wherein
upon receipt of an instruction to schedule recording of more programs than can be recorded by the scheduled recording module (302) through scheduled recording, the recording controller (250) stores data of at least part of the programs specified by the instruction automatically recorded by the automatic recording module (301) as data recorded by the scheduled recording module (302).

2. The recorder of Claim 1, wherein
the storage module comprises a first storage module (271) configured to store data of programs recorded by the automatic recording module (301) and a second storage module (270) configured to store data of a program recorded by the scheduled recording module (302), and
the recording controller (250) is configured to copy the data from the first storage module (271) into the second storage module (270) to store the data of the programs specified by the instruction automatically recorded by the automatic recording module (301) as data recorded by the scheduled recording module (302).

3. The recorder of Claim 1, further comprising a display controller (251) configured to display information indicating whether a program is to be recorded by the scheduled recording module (302) or the automatic recording module (301).

4. The recorder of Claim 1, wherein, when the automatic recording module (301) deals with not all channels of the television broadcasting, the recording controller (250) controls a program from a channel that is recordable by the automatic recording module (301), among the programs specified by the instruction, to be recorded by the automatic recording module (301).

5. The recorder of Claim 4, wherein, upon receipt of an instruction to schedule recording of more programs than can be recorded by the scheduled recording module (302) through scheduled recording, the recording controller (250) controls a program that is also to be automatically recorded by the automatic recording module (301), among the programs specified by the instruction, to be recorded by the automatic recording module (301).

6. The recorder of Claim 2, wherein, when data of a program recorded by the automatic recording module (301) is only movable, the recording controller (250) controls the data to remain in the first storage module (271) for a predetermined period of time and to be automatically copied from the first storage module (271) into the second storage module (270) at a time that allows the data to be sufficiently moved from the first storage module (271) to the second storage module (270) before the data is automatically deleted.

7. The recorder of Claim 1, wherein, when the automatic recording module (301) is set to perform the automatic recording during a specific period of time and a program scheduled to be recorded by the automatic recording module (301) is not broadcast during the specific period of time, the automatic recording module (301) is set to perform the automatic recording during a period of time including broadcast time of the program scheduled to be recorded by the automatic recording module (301).

8. A method of controlling a recorder configured to record television broadcasting and comprising a scheduled recording module configured to perform scheduled recording of a specific program and an automatic recording module configured to perform automatic recording of programs from multiple channels, the method comprising:
storing, upon receipt of an instruction to schedule recording of more programs than can be recorded by the scheduled recording module through scheduled recording, data of the programs specified by the instruction automatically recorded by the automatic recording module in a storage module as data recorded by the scheduled recording module.
